# EUROPEAN PATENT SPECIFICATION

(11) **EP 3 711 884 B1**
(45) Date of publication and mention of the grant of the patent: **15.06.2022**
(21) Application number: 20164168.5
(22) Date of filing: 19.03.2020
(51) Int. Cl.: B23D 61/18, B28D 1/08

(54) **CUTTING WIRE**
SCHNEIDDRAHT
FIL DE COUPE

(30) Priority: 22.03.2019 IT 201900004181
(43) Date of publication of application: 23.09.2020
(73) Proprietor: M.E.C.I. S.r.L., 54100 Massa (IT); Pucci Vittorio, 54100 Massa (IT)
(72) Inventor: PUCCI, Vittorio, I-54100 MASSA (IT)
(74) Representative: Lunati & Mazzoni S.r.L.

(56) References cited:
- EP-A1- 1 953 293
- WO-A1-2012/142633
- WO-A1-2015/028950
- WO-A1-2015/180947
- CA-A- 663 798
- FR-A1- 2 513 558

## Description

This invention relates to a cutting wire of the type specified in the preamble of the first claim. Such a cutting wire is known from WO 2015/180947 A1.

As is well known, the cutting wire is used in a wire cutting machine usually used for cutting cement, marble, stone, or other stone material.

The cutting wire consists of a rope with seven intertwined metal cables and of rings, made of steel or plastic material, on the side surface of which cutting inserts are applied, usually synthetic diamond beads.

In order to prevent the rings from sliding along the rope, the cutting wire is equipped with compression springs or polymer cylinders placed between the rings and designed to work in opposition to a variation in distance between the rings.

The described prior art comprises some significant drawbacks.

In particular, the rope tends to wear causing the cutting wire to break, with consequent risks for the processing and, above all, for the operator.

This aspect is exacerbated by the fact that the rope's breaking, and therefore the cutting wire's breaking, can occur at any point making the behaviour of the cutting wire after such an event unpredictable. If the cutting machine is not promptly stopped, therefore, the cutting wire splits into two branches with unpredictable behaviour.

In this context, the technical task underlying this invention is to devise a cutting wire capable of substantially overcoming at least some of the above-mentioned drawbacks.

One important purpose of the invention is to obtain a cutting wire that is extremely safe, even if it breaks.

The technical task and the specified purposes are achieved by a cutting wire as claimed in the appended claim 1. Examples of preferred embodiments are described in the dependent claims.

The characteristics and advantages of the invention are clarified by the following detailed description of preferred embodiments thereof, with reference to the accompanying drawings, wherein:
**Fig. 1** shows, in scale, a cutting wire according to the invention;
**Fig. 2** illustrates, in scale, an assembly of the cutting wire; and
**Fig. 3** highlights one component of the cutting wire.

In this document, when measurements, values, shapes, and geometric references (such as perpendicularity and parallelism) are associated with words like "approximately" or other similar terms, such as "almost" or "substantially", they shall be understood as without errors of measurement or imprecisions due to errors of production and/or manufacturing and, above all, without a slight divergence from the value, measurement, shape, or geometric reference with which it is associated. For example, if associated with a value, such terms preferably indicate a divergence of no more than 10% of the value itself.

The measurements and data provided in the present text are to be considered as performed in ICAO International Standard Atmosphere (ISO 2533), unless otherwise indicated.

With reference to the figures, the reference number **1** indicates, as a whole, the cutting wire according to the invention.

This is designed to be used in a wire cutting machine for cutting materials such as cement, marble, stone, or stone material.

The cutting machine may, therefore, comprise one or more cutting wires 1.

The cutting wire 1 defines a longitudinal axis **1a.**

The cutting wire 1 comprises two or more cables defining the core **2** of the wire 1. The core 2 substantially extends along the longitudinal axis 1a. As a result, the cables extend at least partially along said longitudinal axis 1a.

The cables may be substantially parallel to the longitudinal axis 1a or be intertwined with each other. In particular, the core 2 consists of a certain number of cables (preferably seven) that are strands overlapping and uniformly wound in a spiral about a central core.

In detail, the cutting wire 1 comprises at least one weak cable **2a** and at least one strong cable **2b.**

The cutting wire 1 preferably comprises only one weak cable 2a. Alternatively, it comprises at least two weak cables 2a and, in detail, exactly two weak cables 2a. The cutting wire 1 may comprise several strong cables 2b and, in detail, six strong cables 2b.

The strong cables 2b may enclose the weak cable 2a that, thus, is the central cable of the core 2. In particular, they may be intertwined around the weak cable 2a. The cables 2a and 2b may be made of different materials or, preferably, of the same material.

A weak cable 2a is differentiated from the strong cable 2b in that it is equipped with lower mechanical stress resistance. In particular, it comprises at least one weakened portion **2c** that is structurally weaker than the strong cables 2b and the rest of the weak cable 2a.

Each weak cable 2a may comprise just one weakened portion 2c and, therefore, a single section with lower mechanical strength than the rest of the weak cable 2a. Alternatively, each weak cable 2a may comprise several weakened portions 2c, each of which defines a section with lower mechanical strength than the parts of weak cable 2a adjacent to the weakened portion 2c.

The weakened portions 2c may be substantially equally spaced apart.

They may have a mutual distance substantially less than 5 m, more specifically 3 m, and even more specifically 1 m. Said mutual distance preferably substantially ranges between 1 m and 0.5 m.

The weakened portion 2c represents a part of weak cable 2a with a lower ability to withstand the forces/torques to which the cutting wire 1 is subjected when in use and, consequently, on which wear and tear is concentrated and, therefore, the risk that the cutting wire 1 breaks. It thus defines for the core 2, and thus for the cutting wire 1, a breaking sector.

The weak cable 2a may comprise a single weakened portion 2c appropriately placed halfway along the weak cable 2a along the longitudinal axis 1a.

In order to define the weakened portion 2c, the weak cable 2a may have a section narrowing at said weakened portion 2c.

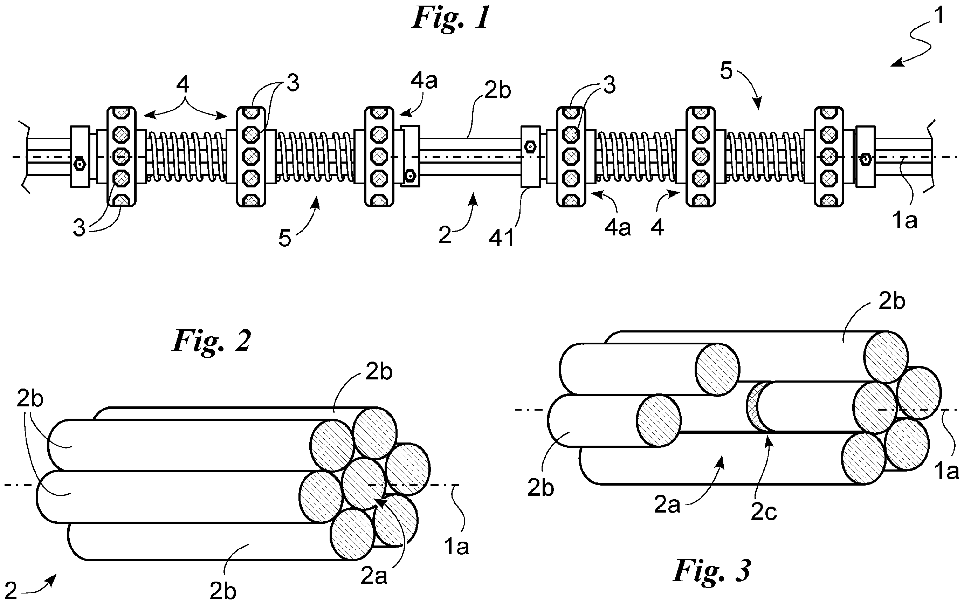

The weak cable 2a preferably has a cut at the weakened portion 2c and, appropriately, made along part or, preferably, the entire section of the weak cable (Fig. 3).

The weak cable 2a thus defines two adjacent ends at said cut and may comprise a dowel joining for the adjacent ends with lower resistance than the rest of the weak cable 2a. The dowel may be made of a different material to the cable 2a and, appropriately, have lower resistance than the weak cable 2a.

The cutting wire 1 comprises cutting inserts 3 bound to the core 2 and, thus, to one or more of the cables 2a and 2b.

The cutting inserts 3 are bound to at least one strong cable 2b.

The cutting inserts 3 can be diamond cut. According to the invention, the cutting wire 1 comprises one or more first rings **4** bound to the core 2 (appropriately, to the least one strong cable 2b) and the cutting inserts 3 are integral with said first rings 4; and, appropriately, one or more spacers **5** may be placed between adjacent first rings 4 and designed to work in opposition to a variation in distance between said adjacent first rings 4 along the longitudinal axis 1a. The first rings 4 do not radially overlap, i.e. perpendicularly to the longitudinal axis 1a; the weak portion 2c, and, in particular, the cut.

Each of the spacers 5 is basically a coating of the part of the core 2 between two adjacent first rings 4.

A spacer 5 may comprise a spring, preferably a compression spring. Alternatively, it may comprise a cylindrical body appropriately made of polymer material.

According to the invention, the first rings 4 comprise, for each weakened portion 2c, a pair of second rings **4a** proximal to the weakened portion 2a and designed to enclose the portion 2c between them. The cutting wire 1 is preferably free of spacers 5 between the proximal second rings 4a as shown in Fig. 1.

According to the invention, each proximal second ring 4a comprises clamping means **41** of the second ring itself in the core 2 and, in detail, at least one strong cable 2b.

The clamping means 41 are designed to lock the proximal second ring 4a to the core 2 by preventing it from sliding along the longitudinal axis 1a.

The operation of the cutting wire 1, described above in structural terms, is as follows. When in use, the cutting wire 1 is subject to tensions/torques that mechanically stress the wire itself, in particular the core 2, and, more precisely, the cables. Thus, the cables tend to wear out until one or more of them breaks. In particular, thanks to the presence of the weakened portion 2c and, in particular, the cut, the weak cable 2a defines for the core 2 an area of lower structural resistance compared to the remaining core making it possible to identify in advance the breaking area of the wire 1.

The cutting wire 1 according to the invention achieves important advantages.

In fact, the weakened 2c portion of the weak cable 2a, by defining a part of the core with less resistance to mechanical stress, makes it possible to identify, with extreme precision, the breaking point of the cutting wire 1 and, therefore, to take the necessary safety measures in that area alone.

This translates not only to greater safety for the operator, but also to lower costs. In fact, any cutting machine equipped with this innovative cutting wire 1 will require less safety equipment as it will be possible to precisely identify the breaking point of the wire 1.

Variations may be made to the cutting wire described above without departing from the scope of the invention as defined in the claims.

## Claims

1. A cutting wire (1) defining a longitudinal axis (1a) and comprising:
- cables (2a, 2b) defining a core (2) of said cutting wire (1) and extending along said longitudinal axis (1a);
- cutting inserts (3) bound to said core (2);
- said cables (2a, 2b) comprising at least one weak cable (2a) comprising at least one weakened portion (2c) suitable to define, for said core (2), a section with lower mechanical strength, and therefore a breaking section of said cutting wire (1)
and **characterised in that**
- said cutting (1) wire comprises first rings (4) bound to said core (2); wherein said cutting inserts (3) are integral with said first rings (4); wherein said first rings (4) comprise a pair of second rings (4a) proximal to said weakened portion (2c) and suitable for enclosing therebetween said weakened portion (2c); and wherein each of said proximal second rings (4a) comprises clamping means (41) suitable for integrally binding said proximal second ring (4a) to said core (2).

2. The cutting wire (1) according to claim 1, wherein said weak cable (2a) comprises a plurality of said at least one weakened portion (2c).

3. The cutting wire (1) according to at least one of the preceding claims, wherein said weakened portions (2c) are substantially equally spaced apart by a mutual distance substantially comprised between 1 m and 0.5 m.

4. The cutting wire (1) according to at least one of the preceding claims, wherein said weakened portion (2c) comprises a cut in said weak cable (2a) in the area of said weakened portion (2c).

5. The cutting wire (1) according to the preceding claim, wherein said weak cable (2a) defines two adjacent ends at said cut; said weak cable (2a) comprises a dowel joining said adjacent ends and having a lower resistance than said weak wire (2a).

6. The cutting wire (1) according to at least one of the preceding claims, wherein said weak cable (2a) has a section narrowing in the area of said weakened portion.

7. The cutting wire (1) according to at least one of the preceding claims, wherein said cables (2) are intertwined with each other.

8. The cutting wire (1) according to at least one of the preceding claims, wherein said cables (2) are intertwined around said weak cable (2a).

9. The cutting wire (1) according to at least one of the preceding claims, comprising a plurality of said at least one weak cable (2a).

## Patentansprüche

1. Schneiddraht (1), der eine Längsachse (1a) definiert und Folgendes umfasst:
- Kabel (2a, 2b), die einen Kern (2) des besagten Schneiddrahts (1) definieren und sich entlang der Längsachse (1a) erstrecken;
- Schneideinsätze (3), die an den Kern (2) gebunden sind;
- die besagten Kabel (2a, 2b), die mindestens ein schwaches Kabel (2a) beinhalten, das mindestens einen geschwächten Teilbereich (2c) aufweist, der geeignet ist, für den besagten Kern (2) einen Abschnitt mit geringerer mechanischer Festigkeit und somit einen Bruchbereich des besagten Schneiddrahtes (1) zu definieren
und **dadurch gekennzeichnet, dass**
- der Schneiddraht (1) erste Ringe (4) umfasst, die an den Kern (2) gebunden sind; wobei die Schneideinsätze (3) in die ersten Ringen (4) integriert sind; wobei die ersten Ringe (4) ein Paar zweiter Ringe (4a) umfassen, die sich in der Nähe des geschwächten Abschnitts (2c) befinden und geeignet sind, den dort den geschwächten Abschnitt (2c) zu umfassen; und wobei jeder der benachbarten zweiten Ringe (4a) eine Klemmeinrichtung (41) beinhaltet, die geeignet ist, den zweiten benachbarten Ring (4a) integral an den Kern (2) zu binden.

2. Der Schneiddraht (1) gemäß Anspruch 1, wobei das schwache Kabel (2a) eine Vielzahl von mindestens einem geschwächten Abschnitt (2c) beinhaltet.

3. Der Schneiddraht (1) nach mindestens einem der vorhergehenden Ansprüche, wobei die geschwächten Abschnitte (2c) im Wesentlichen gleichmäßig durch einen gegenseitigen Abstand getrennt sind, der im Wesentlichen zwischen 1 m und 0,5 m beträgt.

4. Der Schneiddraht (1) nach zumindest einem der vorhergehenden Ansprüche, wobei der geschwächte Abschnitt (2c) einen Schnitt in dem schwachen Kabel (2a) im Bereich des geschwächten Abschnitts (2c) beinhaltet.

5. Der Schneiddraht (1) nach dem vorhergehenden Anspruch, wobei das schwache Kabel (2a) zwei benachbarte Enden an dem Schnitt definiert; das schwache Kabel (2a) beinhaltet einen Dübel, der die benachbarten Enden verbindet und einen geringeren Widerstand als der schwache Draht (2a) aufweist.

6. Der Schneiddraht (1) nach mindestens einem der vorhergehenden Ansprüche, wobei das schwache Kabel (2a) einen Abschnitt aufweist, der sich im Bereich des geschwächten Abschnitts verengt.

7. Der Schneiddraht (1) nach zumindest einem der vorhergehenden Ansprüche, wobei die Kabel (2) miteinander verschlungen sind.

8. Der Schneiddraht (1) nach mindestens einem der vorhergehenden Ansprüche, wobei die Kabel (2) um das schwache Kabel (2a) verschlungen sind.

9. Der Schneiddraht (1) nach mindestens einem der vorhergehenden Ansprüche, der eine Vielzahl von mindestens einem schwachen Kabel (2a) umfasst.

## Revendications

1. Fil de coupe (1) définissant un axe longitudinal (1a) et comprenant:
- des câbles (2a, 2b) définissant un noyau (2) dudit fil de coupe (1) et s'étendant le long dudit axe longitudinal (1a);
- inserts de coupe (3) liées audit noyau (2);
- lesdits câbles (2a, 2b) comprenant au moins un câble peu résistant (2a) comprenant au moins une partie fragilisée (2c) apte à définir, pour ledit noyau (2), une section de moindre résistance mécanique, et donc une section de rupture dudit fil de coupe (1)
et **caractérisé en ce que**
ledit fil de coupe (1) comprend des premiers anneaux (4) liés audit noyau (2); dans lequel lesdits inserts de coupe (3) sont intégrés auxdits premiers anneaux (4); dans lequel lesdits premiers anneaux (4) comprennent une paire de seconds anneaux (4a) proximaux à ladite partie affaiblie (2c) et appropriés pour enfermer entre eux ladite partie affaiblie (2c); et dans lequel chacun desdits seconds anneaux proximaux (4a) comprend des moyens de serrage (41) appropriés pour lier de manière intégrale ledit second anneau proximal (4a) audit noyau (2).

2. Fil de coupe (1) selon la revendication 1, dans lequel ledit câble peu résistant (2a) comprend une pluralité de ladite au moins une partie affaiblie (2c).

3. Fil de coupe (1) selon au moins l'une des revendications précédentes, dans lequel lesdites parties affaiblies (2c) sont sensiblement équidistantes d'une distance mutuelle sensiblement comprise entre 1 m et 0,5 m.

4. Fil de coupe (1) selon au moins l'une des revendications précédentes, dans lequel ladite partie affaiblie (2c) comprend une découpe dans ledit câble moins résistant (2a) dans la zone de ladite partie affaiblie (2c).

5. Fil de coupe (1) selon la revendication précédente, dans lequel ledit câble (2a) définit deux extrémités adjacentes au niveau de ladite découpe; ledit câble moins résistant (2a) comprend une cheville joignant lesdites extrémités adjacentes et ayant une résistance inférieure à celle dudit fil moins résistant (2a).

6. Fil de coupe (1) selon au moins l'une des revendications précédentes, dans lequel ledit câble moins résistant (2a) a une section se rétrécissant dans la zone de ladite partie affaiblie.

7. Fil de coupe (1) selon au moins l'une des revendications précédentes, dans lequel lesdits câbles (2) sont entrelacés les uns avec les autres.

8. Fil de coupe (1) selon au moins l'une des revendications précédentes, dans lequel lesdits câbles (2) sont entrelacés autour dudit câble moins résistant (2a).

9. Fil de coupe (1) selon au moins l'une des revendications précédentes, comprenant une pluralité dudit au moins un câble moins résistant (2a).
